# FASCICULE DE BREVET EUROPEEN

(11) **EP 1 676 125 B1**
(45) Date de publication et mention de la délivrance du brevet: **06.08.2008**
(21) Numéro de dépôt: 04791516.0
(22) Date de dépôt: 13.10.2004
(51) Int. Cl.: G01N 21/88, G01N 21/90

(54) **PROCEDE ET DISPOSITIF OPTOELECTRONIQUE D INSPECTION D UNE SURFACE DE REVOLUTION D UN RECIPIENT**
OPTOELEKTRONISCHES VERFAHREN UND VORRICHTUNG ZUR INSPEKTION EINER ROTATIONSFLÄCHE EINES EMPFÄNGERS
OPTOELECTRONIC METHOD AND DEVICE FOR INSPECTING A SURFACE OF REVOLUTION OF A RECIPIENT

(30) Priorité: 13.10.2003 FR 0311951
(43) Date de publication de la demande: 05.07.2006
(73) Titulaire: Tiama, 69700 Montagny (FR)
(72) Inventeur: COLLE, Olivier, F-69600 OULLINS (FR)
(74) Mandataire: Le Cacheux, Samuel L.R.
(86) Numéro de dépôt international: PCT/FR2004/002595
(87) Numéro de publication internationale: WO 2005/038444

(56) Documents cités:
- EP-A- 0 387 930
- EP-A- 0 566 397
- DE-U- 29 907 762
- US-A- 5 430 538

## Description

La présente invention concerne le domaine technique de l'inspection optoélectronique d'objets creux ou récipients, au sens général, à caractère notamment transparent ou translucide, tels que par exemple, des bouteilles, des pots ou des flacons en verre, en vue de contrôler ou d'évaluer des caractéristiques présentées par un tel récipient.

L'objet de l'invention trouve une application particulièrement avantageuse pour détecter au niveau de la bague d'un objet transparent ou translucide, des défauts de surface.

L'objet de l'invention trouve une autre application visant à détecter les défauts dits « de remontée de bague » correspondant à la présence d'une bavure sur la partie interne du bord de la bague d'un récipient.

Dans l'art antérieur, il est connu de nombreuses solutions techniques pour inspecter des récipients en vue de déterminer notamment des défauts. D'une manière générale, un dispositif d'inspection comporte un système d'éclairage fournissant un faisceau lumineux incident de révolution éclairant la surface de la bague du récipient. Un tel dispositif d'inspection comporte également un système de formation d'une image de la surface de la bague. Un tel système comporte notamment une caméra et un objectif disposés pour récupérer les faisceaux lumineux réfléchis par la bague du récipient. La présence d'un défaut perturbe la réflexion de la lumière, de sorte qu'une analyse du signal vidéo délivré par la caméra permet de déterminer la présence dudit défaut.

Un tel dispositif d'inspection présente un inconvénient majeur lié au problème des réflexions parasites des rayons lumineux incidents provenant en particulier du fond et de la paroi du récipient. Ces parasites lumineux qui apparaissent sur l'image compliquent le traitement de l'image afin de déterminer la présence effective ou non de défauts. Il existe un réel risque qu'un récipient soit considéré à tort comme défectueux en raison de tels parasites. A l'inverse et de manière plus grave, ces parasites lumineux sont à même d'empêcher parfois la détection de défauts présents sur le récipient.

Le document DE 299 07 762 décrit un dispositif visant à détecter les défauts apparaissant sur le goulot d'un récipient en mettant en oeuvre au moins deux sources lumineuses de couleurs différentes. Par exemple, le goulot d'un récipient est éclairé par trois faisceaux lumineux concentriques de couleurs rouge, vert et bleue éclairant chacun un secteur annulaire différent. Il est à noter que les angles d'éclairage des sources lumineuses sont différents de manière à obtenir un angle convenable de réflexion des faisceaux incidents couvrant toute la surface de bague inspectée.

Il s'avère que le positionnement des sources lumineuses est relativement délicat à mener à bien. Par ailleurs, le principe de fonctionnement d'un tel dispositif conduit à l'apparition de réflexions parasites, ce qui nuit à la qualité de détection des défauts sur les récipients.

Il apparaît donc le besoin de disposer d'une méthode d'inspection optoélectronique de la surface de révolution d'un objet creux, conçu pour éliminer les parasites lumineux de manière à fiabiliser la procédure d'inspection de tels récipients.

L'objet de l'invention vise donc à proposer un procédé optoélectronique d'inspection d'une surface de révolution d'un récipient comportant les étapes suivantes :
- éclairer la surface à inspecter à l'aide d'un système d'éclairage présentant un axe de révolution situé dans le prolongement de l'axe de révolution du récipient, et comportant au moins trois spectres de rayonnement donnés,
- former une image de la surface à inspecter à l'aide d'une caméra,
- et analyser l'image formée en vue de contrôler des caractéristiques de la surface à inspecter.

Le procédé consiste :
- à éclairer selon au moins trois secteurs angulaires émettant chacun un spectre de rayonnement donné et disjoint de tous les spectres des autres secteurs,
- et à former pour chaque secteur angulaire de la surface à inspecter, une image en sélectionnant uniquement les rayons lumineux renvoyés par la surface et présentant un desdits spectres de rayonnement donné, de manière à éliminer les rayons lumineux parasites dont le spectre de rayonnement ne correspond pas à celui sélectionné pour ledit secteur angulaire.

Selon une variante préférée de réalisation, le procédé selon l'invention consiste à former pour chaque secteur angulaire de la surface à inspecter, une image en sélectionnant uniquement les rayons lumineux renvoyés par la surface et provenant d'un secteur angulaire du système d'éclairage situé du même côté que ledit secteur angulaire de la surface à inspecter par rapport à l'axe de révolution.

Selon cette variante préférée de réalisation, les parasites dus à la lumière issue de la partie de la source opposée sont supprimés puisque seule la lumière issue de la partie de la source adjacente est prise en compte pour l'inspection dé la surface du récipient.

Selon une autre variante de réalisation, le procédé selon l'invention consiste pour chaque secteur angulaire de la surface à inspecter, à former une image en sélectionnant uniquement les rayons lumineux renvoyés par la surface et provenant d'un secteur angulaire du système d'éclairage situé du côté opposé dudit secteur angulaire par rapport à l'axe de révolution.

Avantageusement, le procédé consiste à éclairer la surface à inspecter en secteurs angulaires de valeurs égales.

Avantageusement encore, le procédé consiste à éclairer par des spectres de rayonnement correspondant chacun à une couleur donnée.

Une application du procédé selon l'invention consiste à analyser l'image formée pour déterminer les défauts de bavure ou de surface d'une bague d'un récipient.

Un autre objet de l'invention est de proposer un dispositif d'inspection comportant :
- un système d'éclairage présentant un axe de révolution situé dans le prolongement de l'axe de révolution du récipient, et comportant au moins trois spectres de rayonnement donné,
- et un système de formation d'une image de la surface à inspecter comportant une caméra et des moyens d'analyse de l'image en vue de contrôler des caractéristiques de la surface à inspecter.

Selon l'invention,
- le système d'éclairage présente une surface d'éclairage divisée en au moins trois secteurs angulaires émettant chacun un spectre de rayonnement donné et disjoint de tous les spectres des autres secteurs,
- le système de formation, forme pour chaque secteur angulaire de la surface à inspecter une image en sélectionnant uniquement les rayons lumineux renvoyés par la surface et présentant un desdits spectres de rayonnement donné, de manière à éliminer les rayons lumineux parasites dont le spectre de rayonnement ne correspond pas à celui sélectionné pour ledit secteur angulaire.

Selon une variante préférée de réalisation, le dispositif comporte un système de formation d'images formant pour chaque secteur angulaire de la surface à inspecter, une image en sélectionnant uniquement les rayons lumineux renvoyés par la surface et provenant d'un secteur angulaire du système d'éclairage situé du même côté que ledit secteur angulaire de la surface à inspecter, par rapport à l'axe de révolution.

Selon une autre variante de réalisation, le dispositif comporte un système de formation d'images formant pour chaque secteur angulaire de la surface à inspecter, une image en sélectionnant uniquement les rayons lumineux renvoyés par la surface et provenant d'un secteur angulaire du système d'éclairage situé du côté opposé que ledit secteur angulaire de la surface à inspecter, par rapport à l'axe de révolution.

Selon une première forme de réalisation du système d'éclairage, ledit système comporte une source annulaire présentant l'ensemble des spectres de rayonnement donnés et une série d'au moins trois filtres disposés entre la source annulaire et la surface à inspecter, s'étendant chacun sur un secteur angulaire, chaque filtre présentant un spectre de transmission donné disjoint de celui des autres filtres.

Selon une deuxième forme de réalisation du système d'éclairage, ledit système comporte une série de sources lumineuses élémentaires telles que des diodes électroluminescentes réparties selon au moins trois secteurs angulaires, en émettant pour chaque secteur angulaire un spectre lumineux disjoint entre eux.

Selon une première forme de réalisation du système de formation d'images, ledit système comporte une série d'au moins trois filtres interposés entre la caméra et la surface à inspecter en s'étendant chacun sur un secteur angulaire, chaque filtre présentant un spectre de transmission donné disjoint de celui des autres filtres.

Selon une deuxième forme de réalisation du système de formation d'images, ledit système comporte des moyens de traitement des signaux délivrés par une caméra couleur de manière à obtenir, pour chaque secteur angulaire de la surface à inspecter, un signal représentatif d'un spectre de rayonnement donné.

Diverses autres caractéristiques ressortent de la description faite ci-dessous en référence aux dessins annexés qui montrent, à titre d'exemples non limitatifs, des formes de réalisation de l'objet de l'invention.

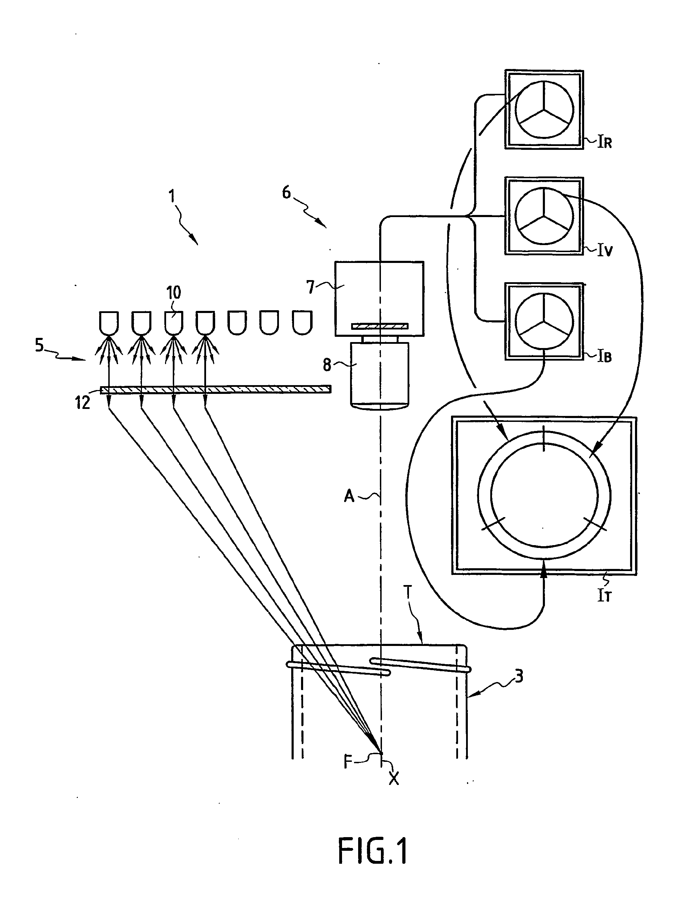

**La** **Figure 1** est une vue en élévation d'un dispositif d'inspection conforme à l'invention mis en oeuvre selon une première forme de réalisation.

La **Figure 2** est une vue schématique en élévation explicitant le principe du dispositif d'inspection conforme à l'invention selon une deuxième forme de réalisation.

La **Figure 3** est une vue schématique en plan explicitant le principe du dispositif d'inspection selon l'invention illustré à la **Fig. 2****.**

Tel que cela ressort plus précisément des **Fig. 1** à **3****,** l'objet de l'invention concerne un dispositif optoélectronique **1** pour inspecter une surface de révolution **T** d'un récipient 3 au sens général. Ce récipient **3** qui présente un axe de symétrie ou de révolution **X** présente de préférence mais non exclusivement un caractère transparent ou translucide. Un tel dispositif d'inspection **1** comporte un système **5** d'éclairage de la surface à inspecter **T** et un système **6** de formation d'une image de la surface à inspecter **T.** Un tel système de formation **6** comporte notamment une caméra **7** munie d'un objectif **8** et reliée à une unité de traitement et d'analyse adaptée pour analyser le signal vidéo délivré par la caméra en vue de contrôler des caractéristiques de la surface à inspecter **T.** L'unité de traitement et d'analyse ne sera pas décrite plus précisément dans la mesure où elle ne fait pas partie de l'objet de l'invention et fait partie des connaissances de l'homme du métier.

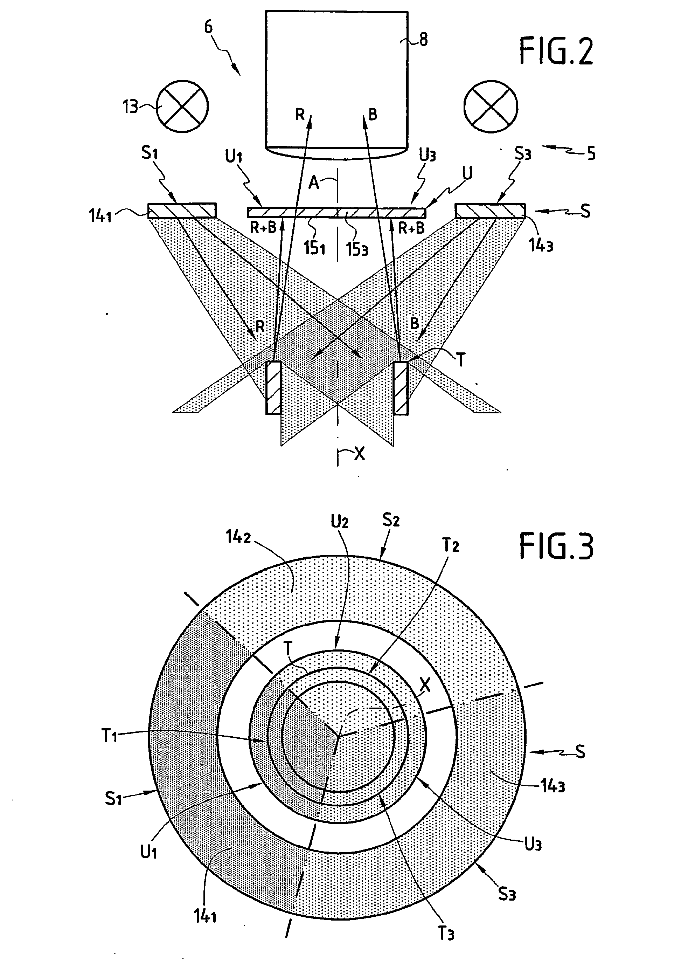

Tel que cela ressort plus précisément des **Fig. 2** et **3****,** le système d'éclairage **5** présente une surface d'éclairage **S** possédant un axe de révolution **A** et présentant toutes formes et dimensions de révolution par exemple, cylindrique, conique, hémisphérique ou plane comme illustré.sur les figurés. Cette surface d'éclairage S est divisée en au moins trois secteurs angulaires **S₁, S₂, S₃** émettant chacun un spectre de rayonnement donné, disjoint de tous les spectres des autres secteurs. En d'autres termes, à chaque secteur angulaire **S₁, S₂, S₃** est attribué un spectre de rayonnement donné qui est disjoint des autres spectres affectés aux autres secteurs. Ainsi, les spectres de rayonnement n'ont aucune valeur commune, c'est-à-dire ne se chevauchent pas. De préférence, il peut être prévu que chaque spectre de rayonnement correspond à une couleur donnée par exemple rouge, vert, bleu ou jaune. Dans l'exemple illustré aux Fig**. 2** et **3****,** les secteurs angulaires **S₁, S₂, S₃** émettent des spectres de rayonnement respectivement rouge **R,** vert **V** et bleu **B.** Il est à noter qu'au sens de l'invention, chaque secteur angulaire **S₁, S₂, S₃** de la surface d'éclairage S comporte un spectre de rayonnement donné, de sorte qu'en chaque point des secteurs angulaires **S₁, S₂, S₃,** le spectre de rayonnement émis est disjoint du spectre de rayonnement émis au voisinage d'un point opposé ou symétrique pris par rapport à l'axe de révolution **A.**

Le système d'éclairage 5, tel que décrit ci-dessus, permet d'éclairer la surface à inspecter **T** selon au moins et dans l'exemple illustré, trois secteurs angulaires **T₁, T₂, T₃.** En d'autres termes, la surface à inspecter **T** se trouve divisée en au moins trois secteurs angulaires **T₁, T₂, T₃** recevant chacun au moins un spectre de rayonnement donné. Il est à noter que le récipient 3 est placé de manière que son axe de révolution **X** se trouve placé dans le prolongement de l'axe de révolution **A** du système d'éclairage. Dans l'exemple illustré aux **Fig. 2** et 3, les secteurs angulaires **T₁, T₂, T₃** de la surface de bague **T** reçoivent les spectres de rayonnement correspondant respectivement rouge **R,** vert **V** et bleu **B.** Il doit ainsi être compris qu'il est affecté, à chaque secteur angulaire **T₁, T₂, T₃** de la surface à inspecter **T,** un spectre de rayonnement disjoint des autres spectres de rayonnement. Chaque secteur angulaire **T₁, T₂, T₃** de la surface de bague **T** présente de préférence, une étendue angulaire identique, à savoir 120° dans l'exemple illustré. Dans le cas où la surface à inspecter **T** est divisée en quatre secteurs, chacun d'eux présente une étendue angulaire de 90°.

Selon une première variante de réalisation illustrée à la **Fig. 1**, le système d'éclairage **5** comporte une série de sources lumineuses élémentaires **10** telles que des diodes électroluminescentes réparties selon trois secteurs angulaires **S₁, S₂, S₃** en émettant, pour chaque secteur angulaire, un spectre de rayonnement donné. Dans l'exemple illustré, il peut être prévu de monter dans chaque secteur angulaire **S**i, **S**₂, **S₃** des diodes d'une couleur donnée par exemple rouge, verte ou bleue.

Dans l'exemple illustré à la **Fig. 1** visant plus particulièrement un dispositif de détection de défauts de surface, le système d'éclairage **5** comporte un système optique **12** disposé entre les sources lumineuses élémentaires **10** et la surface à inspecter **T** et adapté pour assurer la convergence ou la focalisation de l'anneau lumineux uniforme en un point de convergence **F** situé sur l'axe de symétrie **X** du récipient. Selon cet exemple, la surface **T** de bague à inspecter est donc éclairée par un faisceau lumineux incident uniforme et convergent. Bien entendu, l'objet de l'invention s'applique quelle que soit la nature de l'éclairage. Ainsi, la lumière émise en direction du récipient peut présenter des caractéristiques très diversifiées telles que par exemple, divergente ou convergente, plus ou moins étendue, homogène, diffuse, etc.

Selon une deuxième variante de réalisation illustrée plus particulièrement aux **Fig.** 2 et **3****,** le système d'éclairage **5** comporte une source lumineuse annulaire **13** d'axe de révolution **A,** présentant l'ensemble des spectres de rayonnement et une série de filtres **14₁, 14₂, 14₃** disposés entre la source annulaire **13** et la surface à inspecter **T.** Chaque filtre **14₁, 14₂, 14₃** s'étend ainsi sur un secteur angulaire donné **S₁, S₂ S₃** de la surface d'éclairage et présente un spectre de transmission donné disjoint de celui des autres filtres. En d'autres termes, chaque filtre **14₁, 14₂, 14₃** est passant pour un spectre de rayonnement donné et bloquant pour les autres spectres de rayonnement. Dans l'exemple considéré, chaque secteur angulaire **S₁, S₂, S₃** de la surface d'éclairage **S** est équipé d'un filtre tel que chacun d'eux permet la transmission d'un spectre de rayonnement différent respectivement rouge **R,** vert **V,** bleu **B.**

Selon une autre caractéristique de l'invention, le système 6 forme pour chaque secteur angulaire **T₁, T₂, T₃** de la surface à inspecter **T,** une image, en sélectionnant uniquement les rayons lumineux renvoyés par la surface **T** et présentant un desdits spectre de rayonnement donné, de manière à éliminer les rayons lumineux parasites dont le spectre de rayonnement ne correspond pas à celui sélectionné pour ledit secteur angulaire. En d'autres termes, le système **6** récupère pour chaque secteur angulaire **T₁, T₂, T₃** de la surface à inspecter **T,** uniquement les rayons lumineux renvoyés par la surface à inspecter **T** et présentant pour chaque secteur angulaire **T₁, T₂, T₃** de la surface à inspecter **T,** le spectre de rayonnement sélectionné ou affecté audit secteur angulaire. Il doit être compris que chaque secteur angulaire **T₁, T₂, T₃** de la surface à inspecter **T** peut recevoir plusieurs spectres de rayonnement. Toutefois, chaque spectre de rayonnement reçu par un secteur angulaire **T₁, T₂, T₃** de la surface à inspecter **T,** qui est différent de celui affecté audit secteur angulaire, est éliminé car considéré comme un parasite lumineux.

A titre d'exemple, la **Fig. 2** montre que notamment chacun des secteurs angulaires **T₁, T₃** de la surface à inspecter **T** renvoie deux spectres de rayonnement à savoir rouge **R** et bleu **B.** Cependant, le système de formation 6 est adapté pour récupérer pour ces secteurs angulaires **T₁, T₃** uniquement les spectres de rayonnement attribués à ces secteurs, à savoir respectivement rouge **R,** et bleu **B.**

Dans l'exemple illustré sur les **Fig. 2** et **3****,** la sélection des spectres de rayonnement pour chaque secteur angulaire de la surface de bague **T** est réalisée par l'utilisation de filtres optiques en nombre et en position identiques aux secteurs angulaires de la surface à inspecter **T.** Ainsi des filtres **15₁, 15₂, 15₃** sont interposés entre la caméra **8** et la surface à inspecter **T** en s'étendant sur une étendue angulaire respectivement **U₁, U₂, U₃** correspondant à celle d'un secteur angulaire **T₁, T₂, T₃** de la surface de bague **T.** Chaque filtre **15₁, 15₂, 15₃** présente un spectre de transmission donné disjoint de celui des autres filtres. En d'autres termes, chaque filtre est passant pour un spectre de rayonnement donné et bloquant pour les autres spectres de rayonnement. Dans l'exemple illustré aux **Fig. 2** et **3****,** chaque secteur angulaire **U₁, U₂, U₃** de la surface d'un filtre est tel que chacun d'eux permet la transmission d'un spectre de rayonnement différent respectivement rouge **R,** vert **V,** bleu **B**

La **Fig. 1** illustre une deuxième variante à savoir électronique ou logicielle pour sélectionner parmi les faisceaux renvoyés par la surface à inspecter **T,** les spectres de rayonnement pour chacun des secteurs angulaires de ladite surface à inspecter. A cet égard, les faisceaux renvoyés par la surface à inspecter **T** sont récupérés par une caméra couleur dont l'unité d'analyse et de traitement associée permet de séparer les spectres de rayonnement à savoir rouge, vert, bleu, pour chaque secteur angulaire de la surface à inspecter **T.** Tel qu'illustré, il est ainsi obtenu, pour chaque secteur angulaire de la surface à inspecter **T,** une image rouge **I_{R},** verte **I_{V}** et bleue **I_{B}** dont la combinaison permet d'obtenir une image **I_{T}** de la surface inspectée découpée en secteurs angulaires. Pour chacun de ces secteurs angulaires, les moyens de traitement permettent d'obtenir un signal représentatif d'un spectre de rayonnement donné disjoint de celui des autres secteurs angulaires. Il est à noter que ce traitement logiciel effectué au niveau des signaux délivrés par la caméra couleur permet d'aboutir à un traitement équivalent à celui opéré par les filtres décrits en relation des **Fig.2** et **3****.**

Selon un exemple préféré de réalisation, chaque secteur angulaire **S₁, S₂, S₃** du système d'éclairage 5 est situé du même côté par rapport à l'axe de **révolution X** qu'un secteur angulaire de surface de bague T, dont le spectre de rayonnement récupéré correspond à celui du secteur angulaire **S₁, S₂, S₃** voisin. Ainsi, tel que cela ressort de l'exemple illustré aux **Fig. 2** et **3****,** le secteur angulaire **S₃** émettant un spectre de rayonnement bleu est situé du même côté par rapport à l'axe de révolution **X,** que le secteur angulaire **T₃** de la surface de bague à partir duquel est récupéré le spectre de rayonnement bleu. Le système de formation d'images **6** forme ainsi une image en sélectionnant les rayons lumineux renvoyés pour chaque secteur angulaire de la surface à inspecter T, situé du même côté que le secteur angulaire du système d'éclairage.

Selon cet exemple préféré de réalisation, le dispositif **1** selon l'invention permet de séparer totalement les composantes de la lumière dite opposée et adjacente. En d'autres termes, les faisceaux lumineux renvoyés par la surface à inspecter **T** et destinés à former l'image proviennent uniquement des faisceaux lumineux incidents provenant d'un secteur d'éclairage adjacent, c'est-à-dire situé du même côté par rapport à l'axe de révolution **X.** Ainsi, les rayons lumineux renvoyés par la surface de bague **T** d'un secteur donné ne renvoient pas les faisceaux lumineux provenant d'un secteur angulaire de la source d'éclairage opposé puisque les rayons lumineux renvoyés sont bloqués par le filtre. En observant un secteur angulaire (par exemple **T₁)** éclairé, par exemple en rouge à travers le filtre rouge **14₁** et en ne recevant aucune lumière opposée soit verte ou bleue pour le secteur rouge, seule la lumière rouge adjacente au secteur angulaire **T₁** contribue à l'image. Les parasites provenant des faisceaux opposés peuvent donc être supprimés, ce qui offre une meilleure discrimination des défauts.

Il est à noter que pour certaines applications, il peut être envisagé de sélectionner uniquement les rayons lumineux renvoyés par la surface à inspecter **T** et provenant d'un secteur angulaire du secteur d'éclairage qui se trouve situé du côté opposé, par rapport à l'axe de révolution **X,** au secteur angulaire de ladite surface à inspecter. Par exemple dans l'exemple illustré, il peut être prévu que le filtre **15₁** s'étendant sur le secteur angulaire **U₁** permette la transmission du spectre de rayonnement bleu qui est émis par le secteur angulaire **S₃** situé du côté opposé par rapport à l'axe de révolution **X,** au filtre **15₁.**

L'invention n'est pas limitée aux exemples décrits et représentés car diverses modifications peuvent y être apportées sans sortir de son cadre.

## Revendications

1. Procédé optoélectronique d'inspection d'une surface de révolution **(T)** d'un récipient (3) présentant un axe de révolution **(X),** le procédé comportant les étapes suivantes :
- éclairer la surface à inspecter **(T)** à l'aide d'un système d'éclairage **(5)** présentant une surface d'éclairage (S) avec un axe de révolution **(A)** situé dans le prolongement de l'axe de révolution **(X)** du récipient, et comportant au moins trois spectres de rayonnement donnés disjoints les uns des autres,
- former une image **(I)** de la surface à inspecter à l'aide d'une caméra **(7),** pour chaque secteur angulaire **(T₁, T₂, T₃)** de la surface à inspecter en sélectionnant uniquement les rayons lumineux renvoyés par la surface à inspecter et présentant un desdits spectres de rayonnement donné, de manière à éliminer les rayons lumineux parasites dont le spectre de rayonnement ne correspond pas à celui sélectionné pour ledit secteur angulaire,
- et analyser l'image formée en vue de contrôler des caractéristiques de la surface à inspecter,
**caractérisé en ce qu'**il consiste :
- à éclairer la surface à inspecter **(T)** par le système d'éclairage (**5)** dont la surface d'éclairage **(S)** est de révolution divisée selon au moins trois secteurs angulaires **(S₁, S₂, S₃)** émettant chacun un spectre de rayonnement donné de sorte qu'en chaque point des secteurs angulaires **(S₁, S₂, S₃)** le spectre de rayonnement émis est disjoint du spectre de rayonnement émis au voisinage d'un point symétrique par rapport à l'axe de révolution **(A),**

2. Procédé selon la revendication 1, **caractérisé en ce qu'**il consiste à former pour chaque secteur angulaire **(T₁, T₂, T₃)** de la surface à inspecter **(T),** une image en sélectionnant uniquement les rayons lumineux renvoyés par la surface et provenant d'un secteur angulaire **(S₁, S₂, S₃)** du système d'éclairage situé du même côté que ledit secteur angulaire de la surface à inspecter par rapport à l'axe de révolution **(X).**

3. Procédé selon la revendication 1, **caractérisé en ce qu'**il consiste à éclairer la surface à inspecter **(T)** en secteurs angulaires de valeurs égales.

4. Procédé selon la revendication 1, **caractérisé en ce qu'**il consiste à éclairer par des spectres de rayonnement correspondant chacun à une couleur donnée.

5. Procédé selon la revendication 1, **caractérisé en ce qu'**il consiste à analyser l'image formée pour déterminer les défauts de bavure ou de surface d'une bague d'un récipient.

6. Dispositif optoélectronique d'inspection d'une surface de révolution (T) d'un récipient **(3)** présentant un axe de révolution **(X)**, le dispositif comportant :
- un système d'éclairage **(5)** présentant une surface d'éclairage **(S)** avec un axe de révolution (A) situé dans le prolongement de l'axe de révolution (X) du récipient, et comportant au moins trois spectres de rayonnement donnés disjoints les uns des autres,
- et un système **(6)** de formation d'une image **(I)** de la surface à inspecter comportant une caméra (7) et des moyens (9) d'analyse de l'image en vue de contrôler des caractéristiques de la surface à inspecter, où le système de formation d'images (6) forme pour chaque secteur angulaire (T₁, T₂, T₃) de la surface à inspecter, une image en sélectionnant uniquement les rayons lumineux renvoyés par la surface et présentant un desdits spectres de rayonnement donné, de manière à éliminer les rayons lumineux parasites dont le spectre de rayonnement ne correspond pas à celui sélectionné pour ledit secteur angulaire,
**caractérisé en ce que** :
- le système d'éclairage (5) présente une surface d'éclairage de révolution (S) divisée en au moins trois secteurs angulaires **(S₁, S₂, S₃)** émettant chacun un spectre de rayonnement donné de sorte qu'en chaque point des secteurs angulaires **(S₁, S₂, S₃)** le spectre de rayonnement émis est disjoint du spectre de rayonnement émis au voisinage d'un point symétrique pris par rapport à l'axe de révolution (A),

7. Dispositif selon la revendication 6, **caractérisé en ce que** le système de formation d'images (6) forme pour chaque secteur angulaire (T₁, T₂, T₃) de la surface à inspecter, une image en sélectionnant uniquement les rayons lumineux renvoyés par la surface et provenant d'un secteur angulaire (S₁, S₂, S₃) du système d'éclairage situé du même côté que ledit secteur angulaire de la surface à inspecter, par rapport à l'axe de révolution (X).

8. Dispositif selon la revendication 6, **caractérisé en ce que** le système d'éclairage **(5)** comporte une source annulaire **(13)** présentant l'ensemble des spectres de rayonnement donnés et une série d'au moins trois filtres **(14₁, 14₂, 14₃)** disposés entre la source annulaire **(13)** et la surface à inspecter **(T),** s'étendant chacun sur un secteur angulaire **(S₁, S₂, S₃),** chaque filtre présentant un spectre de transmission donné disjoint de celui des autres filtres.

9. Dispositif selon la revendication 7, **caractérisé en ce que** le système d'éclairage (5) comporte une série de sources lumineuses élémentaires **(10)** telles que des diodes électroluminescentes réparties selon au moins trois secteurs angulaires **(S₁, S₂, S₃),** en émettant pour chaque secteur angulaire un spectre lumineux disjoint entre eux.

10. Dispositif selon la revendication 6, **caractérisé en ce que** le système de formation d'images **(6)** comporte une série d'au moins trois filtres **(15₁, 15₂, 15₃)** interposés entre la caméra **(7)** et la surface à inspecter **(T)** en s'étendant chacun sur un secteur angulaire **(U₁, U₂, U₃),** chaque filtre présentant un spectre de transmission donné disjoint de celui des autres filtres.

11. Dispositif selon la revendication 6, **caractérisé en ce que** le système de formation d'images **(6)** comporte des moyens de traitement des signaux délivrés par une caméra couleur **(7)** de manière à obtenir, pour chaque secteur angulaire de la surface à inspecter **(T1, T2, T3),** un signal représentatif d'un spectre de rayonnement donné.

## Claims

1. An optoelectronic process for the inspection of an area of revolution (T) of a receptacle (3) presenting an axis of revolution (X), where the process includes the following steps:
- illumination of the surface to be inspected (T) using a lighting system (5) presenting a lighting surface (S) with an axis of revolution (A) located in the extension of the axis of revolution (X) of the receptacle, and that includes at least three given radiation spectra separated from each other,
- formation of an image (I) of the surface to be inspected using a camera (7), for each angular sector (T₁, T₂, T₃) of the surface to be inspected by selecting only the light rays returned by the surface to be inspected and presenting one of the said given radiation spectra, so as to eliminate the parasitic light rays whose radiation spectrum does not correspond to that selected for the said angular sector,
- and analysis of the image formed to checking the characteristics of the surface to be inspected,
**characterised in that** it consists of:
- illuminating the surface to be inspected (T) using the lighting system (5) whose the lighting surface (S) of revolution is divided over at least three angular sectors (S₁, S₂, S₃), each emitting a given radiation spectrum, so that at each point of the angular sectors (S₁, S₂, S₃) the radiation spectrum emitted is separate from the radiation spectrum emitted in the vicinity of a symmetrical point taken in relation to the axis of revolution (A).

2. A process according to claim 1, **characterised in that** it consists of forming an image for each angular sectors (T₁, T₂, T₃) of the surface to be inspected (T), by selecting only the light rays returned by the surface and coming from an angular sector (S₁, S₂, S₃) of the lighting system located on the same side as the said angular sector of the surface to be inspected in relation to the axis of revolution (X).

3. A process according to claim 1, **characterised in that** it consists of illuminating the surface to be inspected (T) in angular sectors of equal value.

4. A process according to claim 1, **characterised in that** it consists of illuminating by means of radiation spectra that are each of a given colour.

5. A process according to claim 1, **characterised in that** it consists of analysing the image formed in order to determine the flashing or surface faults of the finish of a receptacle.

6. An optoelectronic device for inspection of a surface of revolution (T) of a receptacle (3) presenting an axis of revolution (X), where the device includes:
- a lighting system (5) presenting a lighting surface (S) with an axis of revolution (A) located in the extension of the axis of revolution (X) of the receptacle, and that includes at least three given radiation spectra separated from each other,
- and a system (6) to form an image (I) of the surface to be inspected, that includes a camera (7) and means (9) for analysis of the image with a view to checking the characteristics of the surface to be inspected, where the image formation system (6) forms an image for each angular sector (T₁, T₂, T₃) of the surface to be inspected by selecting only the light rays returned by the surface and presenting one of the said given radiation spectra, so as to eliminate the parasitic light rays whose radiation spectrum does not correspond to that selected for the said angular sector,
**characterised in that**:
- the lighting system (5) has a lighting surface of revolution (S) divided into at least three angular sectors (S₁, S₂, S₃), each emitting a given radiation spectrum, so that at each point of the angular sectors (S₁, S₂, S₃) the radiation spectrum emitted is separate from the radiation spectrum emitted in the vicinity of a symmetrical point taken in relation to the axis of revolution (A).

7. A device according to claim 6, **characterised in that** the image formation system (6) forms an image for each angular sector sectors (T₁, T₂, T₃) of the surface to be inspected by selecting only the light rays returned by the surface and coming from an angular sector (S₁, S₂, S₃) of the lighting system located on the same side as the said angular sector of the surface to be inspected in relation to the axis of revolution (X).

8. A device according to claim 6, **characterised in that** the lighting system (5) includes an annular source (13) that presents all of the given radiation spectra, and a series of at least three filters (14₁, 14₂, 14₃) located between the annular source (13) and the surface to be inspected (T), each lying on an angular sector (S₁, S₂, S₃), and each filter presenting a given transmission spectrum separated from that of the other filters.

9. A device according to claim 7, **characterised in that** the lighting system (5) includes a series of elementary light sources (10), such as electroluminescent diodes, divided over at least three angular sectors (S₁, S₂, S₃) and emitting a light spectrum that is separated for each angular sector.

10. A device according to claim 6, **characterised in that** the image formation system (6) includes a series of at least three filters (15₁, 15₂, 15₃) interposed between the camera (7) and the surface to be inspected (T), each lying on an angular sector (U₁, U₂, U₃), each filter presenting a given transmission spectrum separated from that of the other filters.

11. A device according to claim 6, **characterised in that** the image formation system (6) includes means for processing the signals delivered by a colour camera (7) so as to obtain, for each angular sector of the surface to be inspected (T₁, T₂, T₃), a signal that is representative of a given radiation spectrum.

## Patentansprüche

1. Optoelektronisches Verfahren zur Untersuchung einer Rotationsfläche (T) eines Behälters (3) mit einer Rotationsachse (X), wobei das Verfahren die folgenden Schritte umfaßt:
- Beleuchten der zu untersuchenden Fläche (T) mit Hilfe eines Beleuchtungssystems (5), das eine Beleuchtungsfläche (S) aufweist, die eine in der Verlängerung der Rotationsachse (X) des Behälters gelegene Rotationsachse (A) hat sowie wenigstens drei gegebene, voneinander getrennte Strahlungsspektren umfaßt,
- Erstellen eines Bildes (I) der zu untersuchenden Fläche mit Hilfe einer Kamera (7) für jeden Winkelsektor (T₁, T₂, T₃) der zu untersuchenden Fläche, indem lediglich die Lichtstrahlen ausgewählt werden, die durch die zu untersuchende Fläche zurückgesandt werden und die eines der gegebenen Strahlungsspektren aufweisen, so daß die Störlichtstrahlen beseitigt werden, deren Strahlungsspektrum nicht dem für den genannten Winkelsektor ausgewählten entsprechen, und
- Analysieren des erstellten Bildes, um Merkmale der zu untersuchenden Fläche zu kontrollieren,
**dadurch gekennzeichnet, daß** es darin besteht:
- die zu untersuchende Fläche (T) mittels des Beleuchtungssystems (5) zu beleuchten, dessen Beleuchtungsfläche (S) eine Rotationsfläche ist, die in wenigstens drei Winkelsektoren (S₁, S₂, S₃) unterteilt ist, welche jeweils ein gegebenes Strahlungsspektrum aussenden, so daß in jedem Punkt der Winkelsektoren (S₁, S₂, S₃) das ausgesandte Strahlungsspektrum von dem Strahlungsspektrum, das in der Nähe eines zur Rotationsachse (A) symmetrischen Punktes ausgesandt wird, getrennt ist.

2. Verfahren nach Anspruch 1, **dadurch gekennzeichnet, daß** es darin besteht, für jeden Winkelsektor (T₁, T₂, T₃) der zu untersuchenden Fläche (T) ein Bild **dadurch** zu erstellen, daß lediglich die Lichtstrahlen ausgewählt werden, die durch die Fläche zurückgesandt werden und die von einem Winkelsektor (S₁, S₂, S₃) des Beleuchtungssystems stammen, der, bezogen auf die Rotationsachse (X), auf der gleichen Seite wie der Winkelsektor der zu untersuchenden Fläche gelegen ist.

3. Verfahren nach Anspruch 1, **dadurch gekennzeichnet, daß** es darin besteht, die zu untersuchende Fläche (T) in Winkelsektoren mit gleichen Werten zu beleuchten.

4. Verfahren nach Anspruch 1, **dadurch gekennzeichnet, daß** es darin besteht, mit Strahlungsspektren zu beleuchten, die jeweils einer gegebenen Farbe entsprechen.

5. Verfahren nach Anspruch 1, **dadurch gekennzeichnet, daß** es darin besteht, das erstellte Bild zu analysieren, um die Grat- oder Oberflächenfehler eines Rings eines Behälters zu bestimmen.

6. Optoelektronische Vorrichtung zur Untersuchung einer Rotationsfläche (T) eines Behälters (3) mit einer Rotationsachse (X), wobei die Vorrichtung folgendes umfaßt:
- ein Beleuchtungssystem (5), das eine Beleuchtungsfläche (S) aufweist, die eine in der Verlängerung der Rotationsachse (X) des Behälters gelegene Rotationsachse (A) hat sowie wenigstens drei gegebene, voneinander getrennte Strahlungsspektren umfaßt, und
- ein System (6) zum Erstellen eines Bildes (I) der zu untersuchenden Fläche, mit einer Kamera (7) und Mitteln (9) zur Analyse des Bildes, um Merkmale der zu untersuchenden Fläche zu kontrollieren, wobei das System zum Erstellen von Bildern (6) für jeden Winkelsektor (T₁, T₂, T₃) der zu untersuchenden Fläche ein Bild erstellt, indem lediglich die Lichtstrahlen ausgewählt werden, die durch die Fläche zurückgesandt werden und die eines der gegebenen Strahlungsspektren aufweisen, so daß die Störlichtstrahlen beseitigt werden, deren Strahlungsspektrum nicht dem für den genannten Winkelsektor ausgewählten entspricht,
**dadurch gekennzeichnet, daß**:
- das Beleuchtungssystem (5) eine Rotationsbeleuchtungsfläche (S) aufweist, die in wenigstens drei Winkelsektoren (S₁, S₂, S₃) unterteilt ist, welche jeweils ein gegebenes Strahlungsspektrum aussenden, so daß in jedem Punkt der Winkelsektoren (S₁, S₂, S₃) das ausgesandte Strahlungsspektrum von dem Strahlungsspektrum, das in der Nähe eines in Bezug auf die Rotationsachse (A) genommenen symmetrischen Punktes ausgesandt wird, getrennt ist.

7. Vorrichtung nach Anspruch 6, **dadurch gekennzeichnet, daß** das System zum Erstellen von Bildern (6) für jeden Winkelsektor (T₁, T₂, T₃) der zu untersuchenden Fläche ein Bild **dadurch** erstellt, daß lediglich die Lichtstrahlen ausgewählt werden, die durch die Fläche zurückgesandt werden und die von einem Winkelsektor (S₁, S₂, S₃) des Beleuchtungssystems stammen, der, bezogen auf die Rotationsachse (X), auf der gleichen Seite wie der Winkelsektor der zu untersuchenden Fläche gelegen ist.

8. Vorrichtung nach Anspruch 6, **dadurch gekennzeichnet, daß** das Beleuchtungssystem (5) eine ringförmige Quelle (13) umfaßt, welche alle gegebenen Strahlungsspektren sowie eine Reihe von wenigstens drei Filtern (14₁, 14₂, 14₃) aufweist, die zwischen der ringförmigen Quelle (13) und der zu untersuchenden Fläche (T) angeordnet sind und die sich jeweils über einen Winkelsektor (S₁, S₂, S₃) erstrecken, wobei jeder Filter ein gegebenes Durchlässigkeitsspektrum aufweist, das von dem der anderen Filter getrennt ist.

9. Vorrichtung nach Anspruch 7, **dadurch gekennzeichnet, daß** das Beleuchtungssystem (5) eine Reihe einzelner Lichtquellen (10), wie Leuchtdioden umfaßt, die entlang wenigstens dreier Winkelsektoren (S₁, S₂, S₃) verteilt sind und für jeden Winkelsektor ein untereinander getrenntes sichtbares Spektrum aussenden.

10. Vorrichtung nach Anspruch 6, **dadurch gekennzeichnet, daß** das System zum Erstellen von Bildern (6) eine Reihe von wenigstens drei Filtern (15₁, 15₂, 15₃) Umfaßt, die zwischen der Kamera (7) und der zu untersuchenden Fläche (T) eingefügt sind und sich jeweils über einen Winkelsektor (U₁, U₂, U₃) erstrecken, wobei jeder Filter ein gegebenes Durchlässigkeitsspektrum aufweist, das von dem der anderen Filter getrennt ist.

11. Vorrichtung nach Anspruch 6, **dadurch gekennzeichnet, daß** das System zum Erstellen von Bildern (6) Mittel zur Verarbeitung der durch eine Farbkamera (7) gelieferten Signale umfaßt, um für jeden Winkelsektor der zu untersuchenden Fläche (T₁, T₂, T₃) ein ein gegebenes Strahlungsspektrum darstellendes Signal zu erhalten.
